(19) Europäisches Patentamt
European Patent Office
Office européen des brevets

(11) Veröffentlichungsnummer: **0 017 915**
**A1**

# (12) EUROPÄISCHE PATENTANMELDUNG

(21) Anmeldenummer: **80101908.4**

(22) Anmeldetag: **10.04.80**

(51) Int. Cl.³: **C 09 K 9/02, G 02 B 5/23**

(30) Priorität: **12.04.79 DE 2914994**

(43) Veröffentlichungstag der Anmeldung: **29.10.80 Patentblatt 80/22**

(84) Benannte Vertragsstaaten: **AT BE CH DE FR GB IT LI LU NL SE**

(71) Anmelder: **BASF Aktiengesellschaft, Carl-Bosch-Strasse 38, D-6700 Ludwigshafen (DE)**

(72) Erfinder: **Clar, Eric, Dr., 144 Punta Chullera KM, Estepona (ES)**
Erfinder: **Schmidt, Werner, Dr., Richildenstrasse 52, D-8000 München 19 (DE)**
Erfinder: **Zauner, Thomas, Dorfplatz 1, D-8011 Parsdorf (DE)**

## (54) Verwendung von phototropen organischen Verbindungen zur Steuerung der Transmission elektromagnetischer Strahlung und neue phototrope Verbindungen.

(57) Die Erfindung betrifft die Verwendung phototroper organischer Verbindungen zur Steuerung der Transmission elektromagnetischer Strahlung, wobei die Verbindungen dadurch gekennzeichnet sind, daß

a) das erste und das zweite Ionisationspotential ($IP_1$ und $IP_2$) möglichst nahe beieinander liegen oder identisch sind,

b) sie im moleküldispers gelösten Zustand einen Triplettzustand mit einer möglichst hohen Lebensdauer bei Temperaturen > -50 °C haben, daß

c) Übergänge vom untersten Triplettzustand in höhere Triplettzustände bei Wellenlänge 380 nm liegen und

d) daß sie gegebenenfalls substituierte aromatische Kohlenwasserstoffe mit 6 oder mehr Elektronensextetten (nach Clar) oder gegebenenfalls substituierte Tetrabenzoperopyrene oder Phenanthrocoronene sind.

EP 0 017 915 A1

ACTORUM AG

## Verwendung von phototropen organischen Verbindungen zur Steuerung der Transmission elektromagnetischer Strahlung und neue phototrope Verbindungen

Die Erfindung betrifft die Verwendung phototroper organischer Verbindungen zur Steuerung der Transmission elektromagnetischer Strahlung, wobei die Verbindungen dadurch gekennzeichnet sind, daß

a) das erste und das zweite Ionisationspotential ($IP_1$ und $IP_2$) möglichst nahe beieinander liegen oder identisch sind,

b) sie im moleküldispers gelösten Zustand einen Triplettzustand mit einer möglichst hohen Lebensdauer bei Temperaturen $> -50$ °C haben, daß

c) Übergänge vom untersten Triplettzustand in höhere Triplettzustände bei Wellenlängen 380 nm liegen und

d) daß sie gegebenenfalls substituierte aromatische Kohlenwasserstoffe mit 6 oder mehr Elektronensextetten (nach Clar) oder gegebenenfalls substituierte Tetrabenzoperopyrene oder Phenanthrocoronene sind.

Im Sinne der vorliegenden Erfindung werden unter phototropen Verbindungen solche verstanden, bei denen sich durch Übergang in einen Triplettzustand die Absorption elektromagnetischer Strahlung ändert, d. h. es tritt nur eine Änderung der Elektronen-Konfiguration auf.

Bg/BL

Voraussetzung für die Brauchbarkeit der Verbindungen für die erfindungsgemäße Verwendung ist eine möglichst geringe Differenz zwischen dem 2. und 1. Ionisationspotential, d. h., daß $IP_2 - IP_1 = \triangle IP$ möglichst klein wird. Ideal ist $\triangle IP = 0$.

Im Sinne der vorliegenden Erfindung wird dabei jedem besetzten Molekülorbital, wobei Orbitale bei n-facher Entartung als n Orbitale gezählt werden, ein Ionisationspotential zugeordnet.

Die Messung von Ionisationspotentialen ist z. B. in der Monographie von D. W. Turner, Molecular Photoelectron Spectroscopy, J. Wiley and Sons, London, 1970, beschrieben. Die Analyse der Spektren und die Ermittlung von $\triangle$ IP kann analog zu der im J. of Chem. Phys. 66, S. 828 (1977) beschriebenen Methode erfolgen.

Für die Brauchbarkeit der Verbindungen ist weiterhin erforderlich, daß sie bei Bestrahlung mit möglichst hoher Quantenausbeute in einen Triplettzustand übergehen, von dem aus dann der unterste Triplettzustand erreicht wird. Dieser unterste Triplettzustand soll bei Temperaturen $> -50$ °C, insbesondere $> -10$ bis 100 °C und vorzugsweise $> 10$ bis 60 °C eine möglichst hohe Lebensdauer haben. Unter hoher Lebensdauer sind Zeiten von mindestens 1/10 sec. und vorzugsweise solche von mehr als 1 sec., gemessen bei Raumtemperatur (20 °C) zu verstehen.

Die Triplettzustände sind nur stabil, wenn die Verbindungen moleküldispers gelöst vorliegen. Als Lösungsmedium sind insbesondere organische und anorganische

hochviskose Flüssigkeiten oder Gläser geeignet, z. B. aus Polyestern, Acrylaten, Epoxidpolymerisaten, Polyvinylchlorid, Polycarbonaten, Polystyrol, Silikonen, Polyolefinen, Polyamiden, Boraten oder Silikaten.

Erfindungsgemäß soll der Übergang vom untersten in einen höheren Triplettzustand durch Strahlung von Wellenlängen >380 nm bewirkt werden, bevorzugt sind Wellenlängen im sichtbaren Bereich des Spektrums und weiterhin im nahen Infrarotbereich. Im sichtbaren Bereich ist der Übergang vom untersten Triplettzustand in einen höheren mit einem Farbwechsel oder dem Auftreten von Farbe verbunden, beispielsweise kann ein die erfindungsgemäß zu verwendenden Verbindungen enthaltendes farbloses oder schwach gelbes klares Substrat durch die Absorption der Strahlung grün oder nahezu undurchsichtig, d. h. schwarz, werden.

Hieraus ergeben sich als Anwendungsmöglichkeiten für die erfindungsgemäß zu verwendenden Verbindungen z. B. die Regulierung der Lichtstärke durch Einarbeitung der Verbindungen in Folien, Brillen, Scheiben oder Linsen, die Lichtintensitätsmessung oder die Verwendung in Informationssystemen.

Die Ansprechzeit der erfindungsgemäß zu verwendenden Verbindungen liegt nach gegenwärtiger Kenntnis im Nano- oder Mikro-Sekundenbereich. Die Abklingzeit entspricht in der Regel der Lebensdauer des Triplettzustandes.

Erfindungsgemäß verwendbare Verbindungen sind solche, die die angegebenen physikalischen Voraussetzungen erfüllen, sie finden sich im wesentlichen unter den ggf.

substituierten hochkondensierten aromatischen Kohlenwasserstoffen, wobei die Regel gilt, daß ein kleiner △ IP-Wert mit einer hohen Anzahl von Elektronensextetten kombiniert sein soll. Die Ermittlung der Sextette kann entsprechend den von E. Clar in der Monographie Polycyclic Hydrocarbons, Academic Press, New York (1964) angegebenen Regeln erfolgen.

Die Verbindungen sollen mindestens 5, vorzugsweise jedoch mehr Sextette aufweisen. Sie können sowohl als Einzelverbindungen als auch als Mischungen verwendet werden, wobei Mischungen wegen der besseren Löslichkeit beim Einarbeiten in die Substrate von Vorteil sein können.

Die in den folgenden Beispielen genannten Teile und Prozente beziehen sich, sofern nicht anders angegeben, auf das Gewicht. Schmelzpunkte sind nicht korrigiert, Ausbeuten nicht optimiert. Die Bezeichnung der neuen aromatischen Verbindungen folgt den in Ref. 2 angegebenen Regeln.

<u>Beispiel 1:</u> 3.4,5.6,7.8,12.13-Tetrabenzoperopyren

20,71 Teile 1-Bromnaphthalin (0,100 Mol) werden in einem 250 ml Zweihalskolben mit Rückflußkühler und Magnetrührer in 75 ml trockenem Diethylether gelöst und die Luft mit trockenem Stickstoff verdrängt. Unter kräftigem Rühren werden zuerst 6,41 Teile n-Butyllithium (0,100 Mol, als ca. 15 %ige Lösung in Hexan) zugegeben, sodann 11,81 Teile 1,4-Dimethylanthrachinon (0,050 Mol), suspendiert in 85 ml trockenem Benzol. Der Ether wird im Stickstoffstrom abgetrieben und das Gemisch noch 15 Minuten refluxiert.

Beim Eingießen in 400 Teile Eis und 100 Teile Eisessig fällt ein weißer Niederschlag von 9,10-Dinaphthyl-(1)-9,10-dihydroxi-9,10-dihydro-1,4-dimethylanthracen (im folgenden kurz "Diol" genannt) aus, der nach 1 Stunde abgesaugt und mit Wasser und wenig Benzol gewaschen wird. Ausbeute 18,4 Teile entsprechend 74,8 % der Theorie. Schmp. 268 - 270 °C unter Zersetzung und Gasentwicklung (nach Umkristallisieren aus Benzol). Analyse: berechnet für $C_{36}H_{28}O_2$: C 87,8 %, H 5,7 %; gefunden: C 88,0 %, H 5,1 %.

10 Teile (0,0203 Mol) des rohen Diols werden mit der 8fachen Menge Elektrolyt-Kupferpulver (durch Stehenlassen über Nacht im Exsikkator über Ammoniak aktiviert) fein verrieben und im Sublimationsrohr 2 Stunden bei 410 °C unter Kohlendioxid erhitzt. Entstehendes Wasser und leichtflüchtige Pyrolyseprodukte werden von Zeit zu Zeit mit der Wasserstrahlpumpe abgesaugt. Anschließend wird das fast reine 3.4,5.6,7.8,12.13-Tetrabenzoperopyren (Formel und Numerierung der Atome nachstehend)

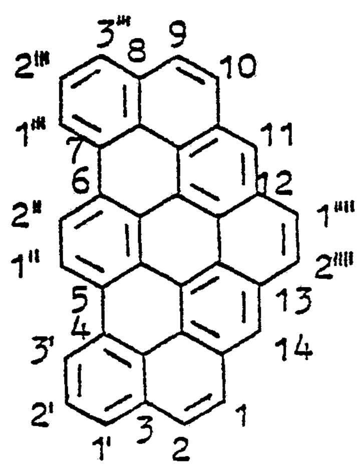

im Ölpumpenvakuum bei 530 °C aus dem Kupfer heraussublimiert. Ausbeute 1,2 Teile entsprechend 13,2 % der Theorie. Nach einmaligem Umkristallisieren aus Trichlorbenzol feine, gelborange Nadeln vom Schmp. 456 °C. Analyse: berechnet für $C_{36}H_{16}$: C 96,40 %, H 3,60 %; gefunden: C 96,3 %, H 3,8 %. UV-Bandenmaxima in Trichlorbenzol mit log $\varepsilon$-Werten in Klammern: α-Bande bei 498 nm (2,77), 479 nm (2,92), 466 nm (3,06); p-Bande bei 438 nm (4,68), 412 nm (4,40), 390 nm (4,49); β-Bande bei 378 nm (4,93), 366 nm (4,88). Massenspektrum: Basispeak bei 448, doppelt und dreifach geladene Molekülionen bei 224 bzw. 149,3; daneben $^{13}C$-Satelliten, keine Fragmentpeaks. PE-Spektrum: $IP_1$ = 6,76 eV, $IP_2$ = 6,99 eV. Phosphoreszenzspektrum in Epoxid bei -196 °C: Maximum bei 656,5 nm.

Verwendet man anstelle von 1,4-Dimethylanthrachinon 12,51 Teile (0,050 Mol) 1,2,4-Trimethylanthrachinon, so erhält man nach dem angegebenen Verfahren folgenden Kohlenwasserstoff:

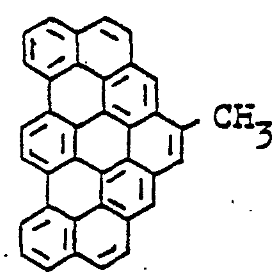

UV-Bandenmaxima in Trichlorbenzol: α-Bande bei 496 nm, 477 nm, 464,5 nm; p-Bande bei 437 nm, 412,5 nm, 389 nm; β-Bande bei 377 nm, 366 nm. Schmp. 414°C.

Beispiel 2: 1'''',2''''-Dimethyl-3.4,5.6,7.8,12.13-tetrabenzoperopyren

Verwendet man anstelle von 1,4-Dimethylanthrachinon 13,22 Teile (0,050 Mol) 1,2,3,4-Tetramethylanthrachinon, so erhält man nach dem unter Beispiel 1 angegebenen Verfahren folgenden Kohlenwasserstoff:

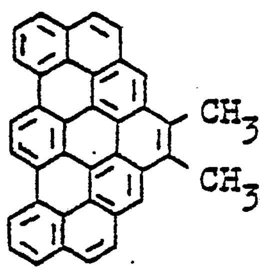

UV-Bandenmaxima in Trichlorbenzol: α-Bande bei 496,5 nm, 465 nm; p-Bande bei 437,5 nm, 412,5 nm, 390 nm; ß-Bande bei 376 nm, 366 nm.

Beispiel 3: 2,9-Dimethyl-3.4,5.6,7.8,12.13-tetrabenzoperopyren

Ausgehend von 22,11 Teilen (0,100 Mol) 4-Methyl-1-bromnaphthalin anstelle von 1-Bromnaphthalin erhält man nach dem unter Beispiel 1 angegebenen Verfahren folgenden Kohlenwasserstoff:

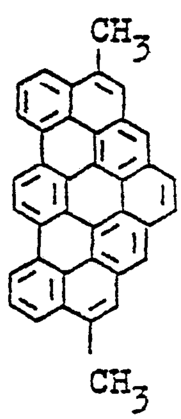

UV-Bandenmaxima in Trichlorbenzol: α-Bande bei 495 nm, 476 nm, 464 nm; p-Bande bei 436,5 nm, 411,5 nm, β-Bande bei 376 nm, 365,5 nm.

Aus 22,11 Teilen (0,100 Mol) 4-Methyl-1-bromnaphthalin und 12,51 Teilen (0,050 Mol) 1,2,4-Trimethylanthrachinon erhält man nach dem unter Beispiel 1 angegebenen Verfahren folgenden Kohlenwasserstoff:

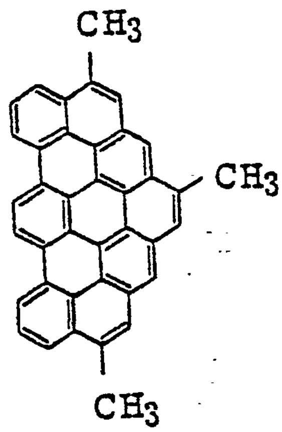

UV-Bandenmaxima in Trichlorbenzol: α-Bande bei 497 nm, 476,5 nm, 465,5 nm; p-Bande bei 440 nm, 415 nm; β-Bande bei 378 nm, 367,5 nm. Schmp. 357°C.

<u>Beispiel 4:</u> 1'''',2'''',2,9-Tetramethyl-3.4,5.6,7.8,12.13-Tetrabenzoperopyren

Durch Umsetzung von 22,11 Teilen (0,100 Mol) 4-Methyl-1-bromnaphthalin mit 13,22 Teilen (0,050 Mol) 1,2,3,4-

Tetramethylanthrachinon erhält man nach dem unter Beispiel 1 angegebenen Verfahren folgenden Kohlenwasserstoff:

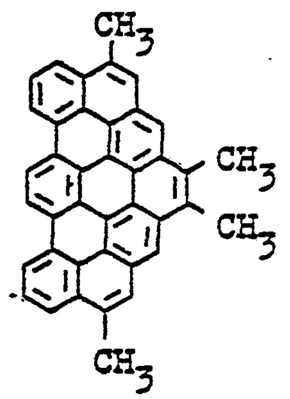

UV-Bandenmaxima in Trichlorbenzol: α-Bande bei 496,5 nm, 476 nm, 464 nm; p-Bande bei 439 nm, 414 nm, 390 nm; ß-Bande bei 377,5 nm, 366,5 nm.

<u>Beispiel 5:</u> 1',2;3'''',9-Bis-ethano-3.4,5.6,7.8,12.13-tetrabenzoperopyren

Mit 23,34 Teilen (0,100 Mol) 4-Bromacenaphthen anstelle von 1-Brom-naphthalin erhält man analog zu Beispiel 1 folgenden Kohlenwasserstoff:

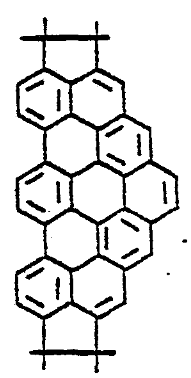

(0,050 Mol) 1,4-Dimethylanthrachinon erhält man nach dem üblichen Verfahren neben den in den Beispielen 1 und 6 genannten Verbindungen auch folgenden Kohlenwasserstoff:

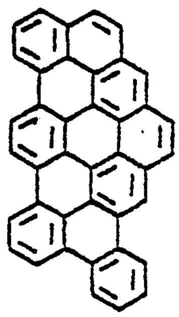

Die Auftrennung des Produktgemisches gelingt durch fraktionierte Sublimation. UV-Bandenmaxima: α-Bande bei 487,5 nm, 467 nm, 457 nm; p-Bande bei 429 nm, 405 nm; ß-Bande bei 386 nm, 368 nm, 352 nm. Fp.: 428°C.

Verwendet man anstelle von 1,4-Dimethylanthrachinon 12,51 Teile (0,050 Mol) 1,2,4-Trimethylanthrachinon, so erhält man mit 25,71 Teilen (0,100 Mol) 9-Bromphenanthren nach dem üblichen Verfahren folgenden Kohlenwasserstoff:

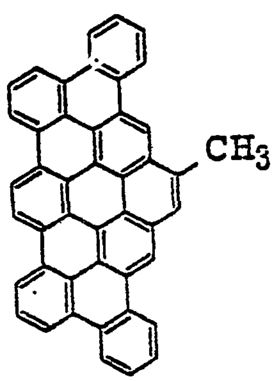

UV-Bandenmaxima in Trichlorbenzol: α-Bande bei 480 nm, 460,5 nm, 450,5 nm; p-Bande bei 422 nm, 398 nm; ß-Bande bei 386 nm, 367,5 nm, 350 nm, 333,5 nm.

Beispiel 8: 1""", 2"""-Dimethyl-1.2,3.4,5.6,7.8,9.10,12.13-Hexabenzoperopyren

Die Synthese erfolgt unter Verwendung von 1,2,3,4-Tetramethylanthrachinon anstelle von 1,4-Dimethylanthrachinon analog zu Beispiel 6:

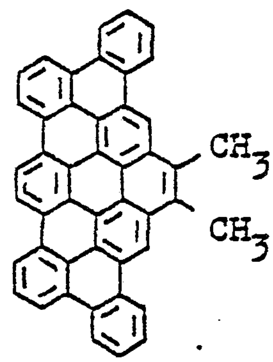

UV-Bandenlagen in Trichlorbenzol: α-Bande bei 480 nm, 461 nm, 450,5 nm; p-Bande bei 422,5 nm, 398 nm; β-Bande bei 386 nm, 368 nm, 350 nm.

Aus 28,52 Teilen (0,100) Mol 3,6-Dimethyl-9-bromphenanthren und 12,51 Teilen (0,050 Mol) 1,2,4-Trimethylanthrachinon resultiert nach dem üblichen Verfahren folgender Kohlenwasserstoff:

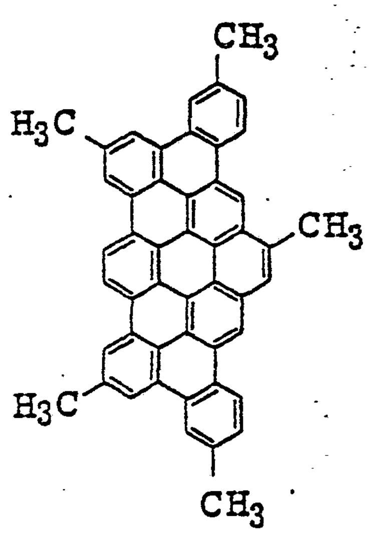

UV-Bandenmaxima in Trichlorbenzol: α-Bande bei 482,5 nm, 465 nm, 452,5 nm; p-Bande bei 427 nm, 401 nm; β-Bande bei 389,5 nm, 371 nm, 353 nm.

<u>Beispiel 9:</u> 1"",2"",3',2",2"",2"'"-Hexamethyl-1.2, 3.4,5.6,7.8,9.10,12.13-Hexabenzoperopyren

28,52 Teile (0,100 Mol) 3,6-Dimethyl-9-bromphenanthren und 13,22 Teile (0,050 Mol) 1,2,3,4-Tetramethylanthrachinon ergeben nach dem üblichen Verfahren folgenden Kohlenwasserstoff:

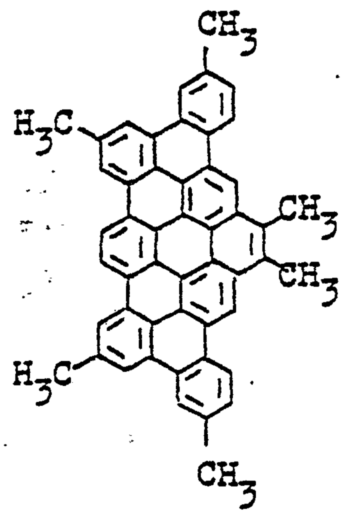

UV-Bandenlagen in Trichlorbenzol: α-Bande bei 483 nm, 465,5 nm, 453 nm; p-Bande bei 427,5 nm, 401 nm; β-Bande bei 390 nm, 371 nm, 353 nm, 336 nm.

Beispiel 10: 1"""",2""""-o-Cyclopenteno-1.2,3.4,5.6, 7.8,9.10,12.13-hexabenzoperopyren

Die Synthese erfolgt unter Verwendung von 1,4-Dimethyl-2,3-cyclopentenoanthrachinon statt 1,4-Dimethylanthrachinon analog zu Beispiel 6:

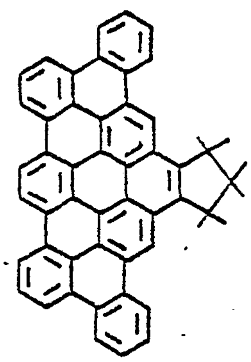

UV-Bandenlagen in Trichlorbenzol: α-Bande bei 480 nm, 461 nm, 450 nm; p-Bande bei 422,5 nm, 398 nm; β-Bande bei 386 nm, 368 nm, 350,5 nm; $IP_1$ = 6,58, $IP_2$ = 6,58.

<u>Beispiel 11:</u> 12.13-o-Phenylen-3.4,5.6,7.8-tribenzoperopyren

In analoger Weise erhält man ausgehend von 1-Bromnaphthalin und 1,2,3,4-Tetrahydro-5,12-dimethyltetracen-6,11-chinon folgenden Kohlenwasserstoff:

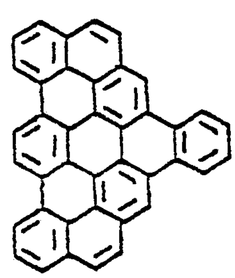

UV-Bandenlagen in Trichlorbenzol: α-Bande bei 480 nm; p-Bande bei 441 nm, 415 nm, 391 nm; β-Bande bei 371 nm, 362 nm, 354 nm. Phosphoreszenzspektrum: Maximum bei 663 nm.

Beispiel 12: 12.13-o-Phenylen-1.2,3.4,5.6,7.8,9.10-Pentabenzoperopyren

Aus 9-Bromphenanthren und 1,2,3,4-Tetrahydro-5,12-dimethyltetracen-6,11-chinon resultiert nach dem üblichen Verfahren folgender Kohlenwasserstoff:

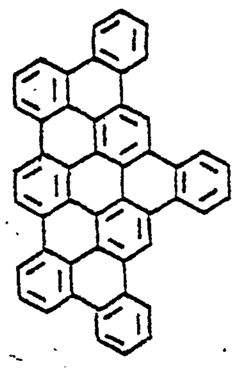

UV-Bandenmaxima in Trichlorbenzol: α-Bande bei 462 nm, 448,5 nm; p-Bande bei 428,5 nm, 404,5 nm; β-Bande bei 380 nm, 363 nm. Phosphoreszenzspektrum: Maximum bei 602 nm.

Beispiel 13

10 Teile der Verbindung aus Beispiel 6 werden in 100 Teilen eines Gemisches aus gleichen Mengen Trifluoracetanhydrid und $D_2O$ suspendiert und nach Zugabe von 5 Teilen $D_2SO_4$ und

1000 Teilen Tetrachlorkohlenstoff 48 Stunden unter Rückfluß erhitzt. Nach der Isolierung des Kohlenwasserstoffs ergibt die massenspektroskopische Analyse, daß ungefähr 30 % des Wasserstoffs gegen Deuterium ausgetauscht sind. Die teildeuterierte Verbindung hat praktisch das gleiche UV-Spektrum, aber eine signifikant erhöhte Lebensdauer des Triplett-Grundzustandes.

Durch Wiederholung der Deuterierung kann der Deuterierungsgrad erhöht werden.

In Anlehnung an die angegebenen Methoden können auch die folgenden Verbindungen hergestellt werden:

Beispiel 14

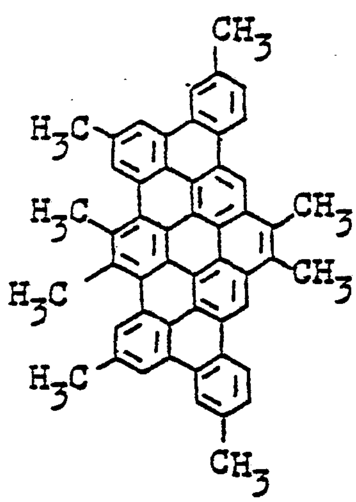

Beispiel 15

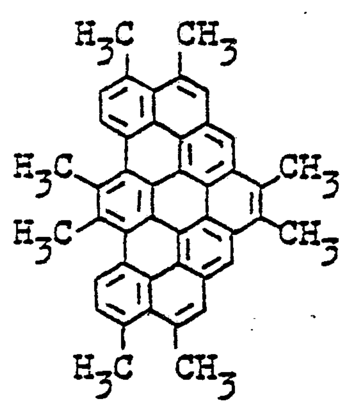

## Beispiel 16

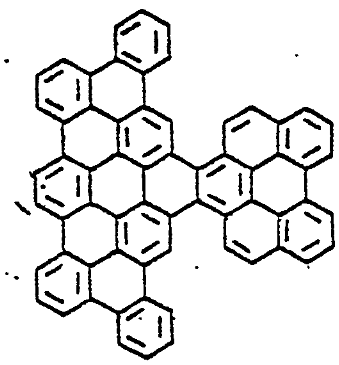

## Beispiel 17

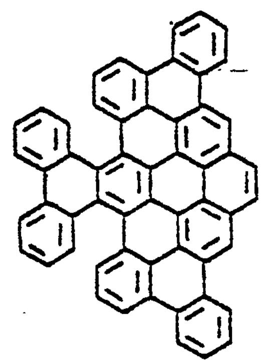

## Beispiel 18

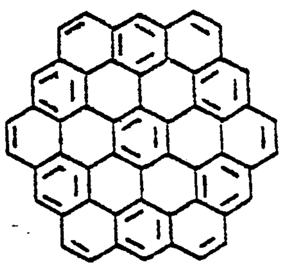

## Beispiel 19

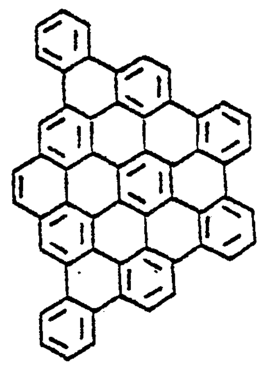

## Beispiel 20

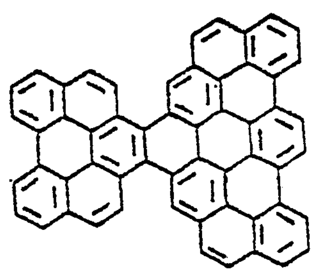

## Beispiel 21

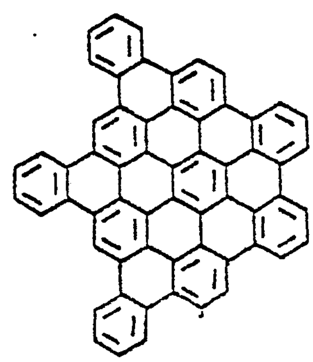

Beispiel 22

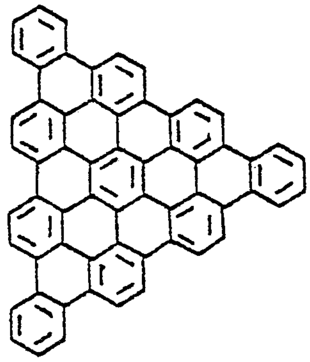

Beispiel 23

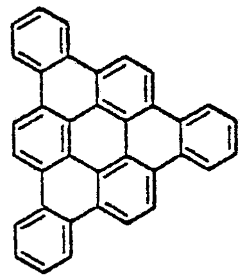

Beispiel 24

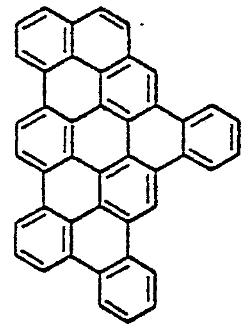

Beispiel 25

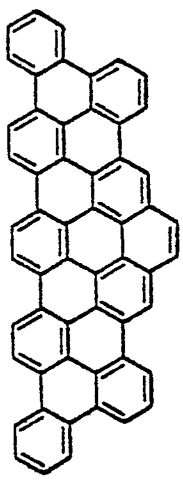

Beispiel 26

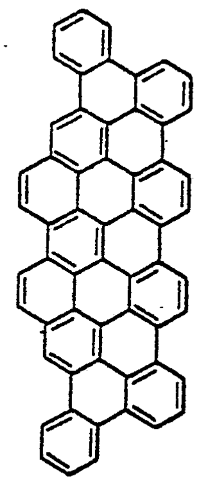

Beispiel 27

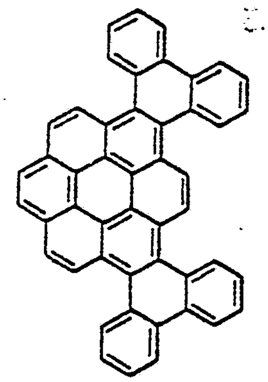

Beispiel 28

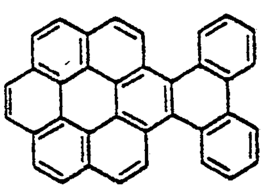

Beispiel 29

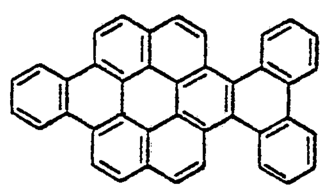

## Anwendungsbeispiele

Da die erfindungsgemäß zu verwendenden Verbindungen in moleküldisperser Form im Substrat vorliegen sollen, ist es günstig, sie durch eine Vorbehandlung, wie Mahlen, Dispergieren oder allgemeine Finishmethoden in eine für den jeweiligen Verwendungszweck optimale Form zu bringen. Die Verbindungen werden im allgemeinen in Mengen von $10^{-1}$ bis $10^{-5}$ Mol bezogen auf 1 kg des Substrates eingearbeitet. Als Einarbeitungsmethoden sind die üblichen geeignet, beispielsweise seien das Spritzen, Kneten, Walzen, Einpolymerisieren oder Einarbeiten unter Verwendung von Lösungsmitteln genannt.

Die photochrome aromatische Verbindung wird je nach Verwendungszweck in Konzentrationen zwischen $10^{-5}$ und $10^{-3}$ Mol/kg Kunstharz eingesetzt. Eine möglichst feine Verteilung der photochromen Verbindung ist wichtig.

Beispiel 1: Photochromes Epoxidharz

0,04 g der photochromen Verbindung aus Beispiel 6 werden bei 180 °C unter Inertgas in 0,8 kg eines vorpolymerisierten Epoxidharzes gelöst. Nach dem Abkühlen werden unter Rühren 0,2 kg Härter zugegeben, und dann wird aus der Masse eine 3 mm starke Platte gegossen, die über Nacht bei Raumtemperatur aushärtet. Im Sonnenlicht färbt sich diese Platte innerhalb weniger Sekunden dunkelgrün.

Beispiel 2: Photochromes Polyvinylchlorid

0,14 g der photochromen Verbindung aus Beispiel 3 werden mit 1 kg Polyvinylchlorid-Pulver unter Zusatz von etwas Cyclohexan gut verrieben. Nach dem Verdunsten des Cyclo-

hexans wird das Gemisch bei 180 °C in einer Kunststoffpresse ausgepreßt. Die Preßlinge zeigen beim Anblitzen mit kurzwelligem sichtbaren oder UV-Licht eine intensive Dunkelfärbung, die ohne jegliche Verzögerung auftritt und nach wenigen Sekunden wieder verschwindet.

Anstelle von Cyclohexan kann man auch andere leichtflüchtige Lösungsmittel verwenden.

In gleicher Weise können auch die weiteren erfindungsgemäß zu verwendenden Verbindungen in die Substrate eingearbeitet werden.

Patentansprüche

1) Verwendung von phototropen organischen Verbindungen zur Steuerung der Transmission elektromagnetischer Strahlung, wobei die Verbindungen dadurch gekennzeichnet sind, daß

a) das erste und das zweite Ionisationspotential ($IP_1$ und $IP_2$) möglichst nahe beieinander liegen oder identisch sind,

b) sie im moleküldispers gelösten Zustand einen Triplettzustand mit einer möglichst hohen Lebensdauer bei Temperaturen $> -50\ ^{\circ}C$ haben, daß

c) Übergänge vom untersten Triplettzustand in höhere Triplettzustände bei Wellenlängen $> 380$ nm liegen und daß

d) sie gegebenenfalls substituierte aromatische Kohlenwasserstoffe mit 6 oder mehr Elektronensextetten (nach Clar) oder gegebenenfalls substituierte Tetrabenzoperopyrene oder Phenanthrocoronene sind.

2) Verwendung von Verbindungen gemäß Anspruch 1, dadurch gekennzeichnet, daß sie ein $\Delta IP \leq 0{,}4$ eV haben.

3) Verwendung von Verbindungen gemäß Anspruch 1 und 2, dadurch gekennzeichnet, daß sie ein $\Delta IP = 0$ haben.

4) Verwendung von Verbindungen gemäß Anspruch 1, dadurch gekennzeichnet, daß der Triplettzustand eine Lebensdauer von $\geq 1/10$ sec. bei Temperaturen $> -50\ ^{\circ}C$ hat.

5) Verwendung von Verbindungen gemäß Anspruch 4, <u>dadurch gekennzeichnet</u>, daß der Triplettzustand eine Lebensdauer von 1 sec. bei 20°C hat.

6) Verwendung von Verbindungen gemäß Anspruch 1, <u>dadurch gekennzeichnet</u>, daß man die Verbindungen in Substrate einarbeitet.

7) Verwendung von Verbindungen gemäß Anspruch 7, <u>dadurch gekennzeichnet</u>, daß man als Substrate Epoxidharze, Polyamide oder Polyvinylchlorid verwendet.

8) **Phototrope organische Verbindungen der aromatischen Kohlenwasserstoffreihe mit einem $\Delta$ IP $\leq$ 0,4 eV und 6 oder mehr Elektronensextetten.**

9) Die in den Beispielen 2 bis 13 beschriebenen und die mit 14 bis 29 bezeichneten phototropen organischen Verbindungen gemäß Anspruch 8.

Europäisches Patentamt

# EUROPÄISCHER RECHERCHENBERICHT

0017915

Nummer der Anmeldung
EP 80 10 1908

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 635 544 (F. STAMM et al.) * Spalte 4, Zeilen 1-7; Spalte 37, Zeilen 3-23; Spalte 39, Tabelle 5; Ansprüche 9-15; Spalte 36, Zeilen 36-40 * -- | 1,4-7 |
| | US - A - 3 716 489 (F. DE LAPP) * Ansprüche 1,5-9 * -- | 1 |
| | US - A - 3 968 051 (F. STAMM et al.) * Ansprüche 1-3 * ---- | 1 |

KLASSIFIKATION DER ANMELDUNG (Int.Cl. 3)

C 09 K 9/02
G 02 B 5/23

RECHERCHIERTE SACHGEBIETE (Int. Cl. 3)

C 09 K 9/02
G 02 B 5/23
G 03 C 1/733

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-07-1980 | V.D. BULCKE |